(19) **Europäisches Patentamt / European Patent Office / Office européen des brevets**

(11) **EP 3 948 168 B1**

(12) **FASCICULE DE BREVET EUROPEEN**

(45) Date de publication et mention de la délivrance du brevet:
**12.04.2023 Bulletin 2023/15**

(21) Numéro de dépôt: **20768084.4**

(22) Date de dépôt: **06.05.2020**

(51) Classification Internationale des Brevets (IPC):
**G01D 5/353** *(2006.01)*     **G02B 6/12** *(2006.01)*
**G02B 6/28** *(2006.01)*     **G02B 6/42** *(2006.01)*

(52) Classification Coopérative des Brevets (CPC):
**G01D 5/35387; G02B 6/12016; G02B 6/2813;**
G01D 5/35316; G02B 6/2746

(86) Numéro de dépôt international:
**PCT/FR2020/050755**

(87) Numéro de publication internationale:
**WO 2020/225513 (12.11.2020 Gazette 2020/46)**

(54) **DISPOSITIF DE RÉPARTITION DE SIGNAL POUR LA MESURE DE DÉCALAGES EN LONGUEUR D'ONDE**

VORRICHTUNG ZUR VERTEILUNG EINES SIGNALS IM HINBLICK AUF DIE MESSUNG VON WELLENLÄNGENVERSCHIEBUNGEN

DEVICE FOR DISTRIBUTING A SIGNAL WITH A VIEW TO MEASURING WAVELENGTH SHIFTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2019 FR 1904783**

(43) Date de publication de la demande:
**09.02.2022 Bulletin 2022/06**

(73) Titulaires:
- **Commissariat à l'Énergie Atomique et aux Énergies Alternatives**
  **75015 Paris (FR)**
- **SAFRAN**
  **75015 Paris (FR)**

(72) Inventeurs:
- **LABEYE, Pierre**
  **38054 GRENOBLE CEDEX 9 (FR)**
- **LAFFONT, Guillaume**
  **38054 GRENOBLE CEDEX 9 (FR)**

(74) Mandataire: **Brevalex**
**Tour Trinity**
**1 Bis Esplanade de La Défense**
**CS 60347**
**92035 Paris La Défense Cedex (FR)**

(56) Documents cités:
**EP-A1- 1 447 693     CN-B- 104 918 145**
**US-A1- 2007 071 388     US-A1- 2017 227 713**

- **NIEWCZAS P ET AL: "PERFORMANCE ANALYSIS OF THE FIBER BRAGG GRATING INTERROGATION SYSTEM BASED ON AN ARRAYED WAVEGUIDE GRATING", IEEE TRANSACTIONS ON INSTRUMENTATION AND MEASUREMENT, IEEE SERVICE CENTER, PISCATAWAY, NJ, US, vol. 53, no. 4, 4 août 2004 (2004-08-04), pages 1192-1196, XP001221388, ISSN: 0018-9456, DOI: 10.1109/TIM.2004.830780 cité dans la demande**

EP 3 948 168 B1

**Description**

**DOMAINE TECHNIQUE**

L'invention se rapporte au domaine de la mesure d'un déplacement de longueur d'onde, notamment pour l'analyse d'un signal lumineux provenant d'un ou plusieurs capteurs chacun apte à traduire une valeur d'un paramètre à mesurer en une valeur de décalage en longueur d'onde sur un signal de sortie. Un tel signal lumineux peut notamment provenir d'une fibre optique au sein de laquelle sont inscrits des réflecteurs de type réseau de Bragg.

**ÉTAT DE LA TECHNIQUE ANTÉRIEURE**

On connaît dans l'art antérieur des fibres optiques, au sein desquelles sont inscrits des réflecteurs de type réseau de Bragg, qui réfléchissent chacun la lumière à une longueur d'onde respective. De telles fibres optiques sont par exemple intégrées au sein d'une structure mécanique, pour en surveiller l'intégrité. L'apparition d'un défaut local sur ladite structure se traduit alors par un décalage de la longueur d'onde de réflexion d'un ou plusieurs des réflecteurs. La détection et la mesure du décalage en longueur d'onde permet de détecter et quantifier le défaut. Les différents réflecteurs d'une même fibre réfléchissant chacun à une longueur d'onde différente, il est également possible de localiser le défaut le long de la fibre optique.

Afin de pouvoir détecter simultanément les réponses respectives des réflecteurs inscrits dans la même fibre optique, il est connu d'envoyer en entrée de la fibre un signal lumineux large spectre, couvrant les longueurs d'onde de réflexion de ces différents réflecteurs. Le signal retour réfléchi par la fibre combine alors les réponses de chacun desdits réflecteurs. Afin de discriminer les contributions des différents réflecteurs, il est connu d'utiliser un démultiplexeur à réseau de guides d'onde (désigné en général par l'acronyme « AWG », pour l'anglais « Arrayed Waveguide Grating »). Un AWG permet de séparer spatialement les différentes contributions spectrales d'un faisceau lumineux d'entrée, ici le signal retour réfléchi par la fibre, à l'aide d'un réseau de guides d'onde disposé entre deux éléments planaires de guidage. Les contributions spectrales du signal retour réfléchi par la fibre sont donc réparties, en sortie de l'AWG, en des positions qui dépendent de leur longueur d'onde. Des guides d'onde de sortie sont agencés en différentes positions déterminées, en sortie de l'AWG, pour recevoir chacun un signal à une longueur d'onde déterminée. Ces guides d'onde de sortie forment chacun un canal de sortie respectif de l'AWG. Ils sont reliés chacun à un photo-détecteur, à leur extrémité opposée à l'AWG. Un tel montage est décrit par exemple par P. Niewczas & al., dans l'article « Performance Analysis of the Fiber Bragg Grating Interrogation System Based on an Arrayed Waveguide Grating », IEEE Transactions on Instrumentation and Measurement, Volume 53, N°4, August 2004, pp 1192-1196. Pour chacun des réflecteurs i inscrits dans la fibre optique, une manière de mesurer un décalage en longueur d'onde de faible amplitude consiste à mesurer un signal sur deux canaux de sortie de l'AWG, associés à deux longueurs d'onde voisines encadrant la longueur d'onde nominale du réflecteur (longueur d'onde de réflexion du réflecteur au repos, c'est-à-dire en l'absence de perturbation externe). On note $A_i$ et $B_i$ ces deux canaux de sortie. La mesure $M_i$ d'un décalage de la longueur d'onde de réflexion du réflecteur i est ensuite donnée par :

$$M_i = \frac{(\alpha_i - \beta_i)}{(\alpha_i + \beta_i)} \qquad (1)$$

avec $\alpha_i$ le signal mesuré sur le canal $A_i$, et $\beta_i$ le signal mesuré sur le canal $B_i$.

CN 104 918 145 B et US 2007/071388 A1 divulguent d'autres dispositifs de répartition de signaux.

Un objectif de la présente invention est de proposer un dispositif de répartition de signal permettant de mesurer au moins un décalage en longueur d'onde, avec un rapport signal sur bruit amélioré relativement au rapport signal sur bruit obtenu pour une telle mesure dans les dispositifs de l'art antérieur.

**PRESENTATION DE L'INVENTION**

Cet objectif est atteint avec un dispositif de répartition de signal, destiné à la mesure d'au moins un décalage en longueur d'onde, et qui comprend un démultiplexeur à réseau de guides d'onde configuré pour séparer spatialement les contributions spectrales d'un signal optique d'entrée.

Selon l'invention, le dispositif de répartition de signal comprend en outre au moins un module de réception. Chaque module de réception comprend un coupleur à interférences multimode et deux guides d'onde de sortie, avec le coupleur à interférences multimode situé entre le démultiplexeur à réseau de guides d'onde et les deux guides d'onde de sortie. Le coupleur à interférences multimode est configuré pour répartir dans lesdits deux guides d'onde de sortie un signal optique provenant du démultiplexeur à réseau de guides. Avantageusement, le coupleur à interférences multimode est accolé directement contre le démultiplexeur à réseau de guides d'onde ou séparé de ce dernier par un adaptateur de type taper.

Le coupleur à interférences multimode est un coupleur à une voie d'entrée et deux voies de sortie, avec sa voie d'entrée du côté du démultiplexeur à réseau de guides d'onde et ses deux voies de sortie du côté des deux guides d'onde de sortie correspondant. Il est configuré pour recevoir en entrée une partie du signal optique démultiplexé en longueur d'onde fourni par le démultiplexeur à réseau de guides d'onde.

Le dispositif selon l'invention est configuré pour recevoir en entrée un signal optique d'entrée fourni par un ensemble d'un ou plusieurs capteurs, où chaque capteur est apte à traduire une valeur d'un paramètre à mesurer en une valeur de décalage en longueur d'onde sur un signal de sortie. Le dispositif de répartition permet de réaliser la mesure simultanée des décalages en longueurs d'onde associés à chacun des capteurs de cet ensemble.

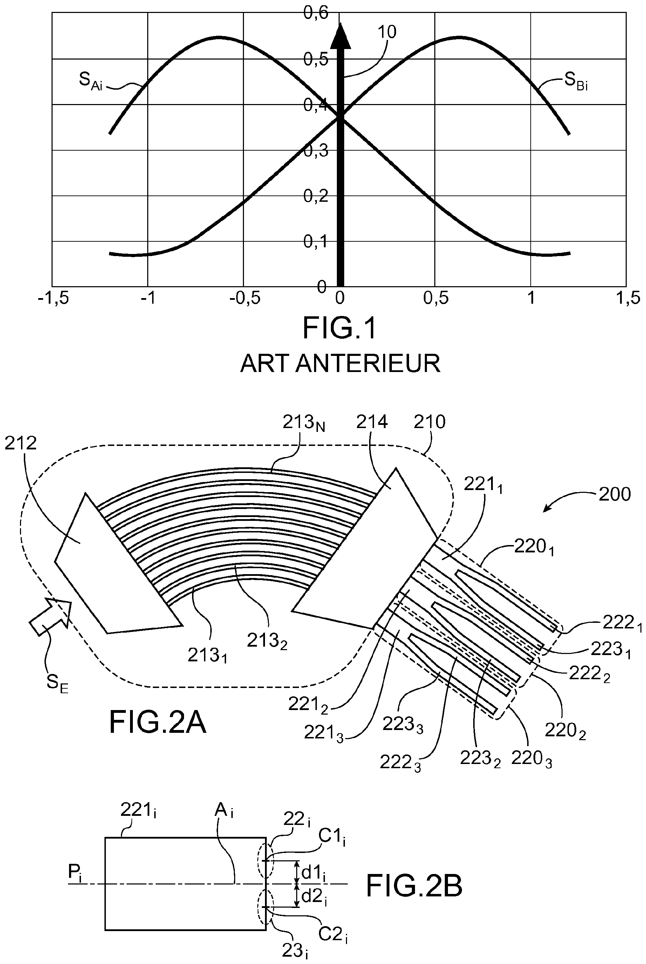

L'idée à la base de l'invention consiste à réaliser que, dans l'art antérieur tel que décrit en introduction, le signal pertinent pour la mesure d'un décalage spectral se trouve dans une zone spectrale pour laquelle la collecte de lumière est peu efficace. Cette observation est illustrée par la figure 1, qui montre les réponses spectrales respectives $S_{Ai}$, $S_{Bi}$ des canaux de sortie $A_i$ et $B_i$ mentionnées en introduction. L'axe des abscisses est une différence de longueur d'onde, en nm, relativement à la longueur d'onde nominale $\lambda_{0i}$ d'un capteur i (l'un des réflecteurs inscrits dans la fibre optique, dans l'exemple présenté en introduction). La longueur d'onde nominale $\lambda_{0i}$ est représentée par la flèche 10. L'axe des ordonnées est une intensité lumineuse, en unité arbitraire. En fonctionnement, le signal renvoyé par le capteur i est à la longueur d'onde nominale $\lambda_{0i}$ (absence de perturbation externe sur le capteur i) ou à une longueur d'onde proche de $\lambda_{0i}$ (présence d'une perturbation externe sur le capteur i). Ce signal se trouve donc dans une région de faible amplitude de la réponse spectrale, pour chacun des deux canaux $A_i$ et $B_i$.

Les inventeurs ont donc eu l'idée de proposer un dispositif offrant des canaux de sortie avec des réponses spectrales aplanies, en comparaison avec les canaux de sortie dans les dispositifs de l'art antérieur. Le signal renvoyé par le capteur i se situe alors dans une région dans laquelle les canaux de sortie selon l'invention, associés à ce capteur, présentent chacun une réponse spectrale de grande amplitude. On améliore ainsi un rapport signal sur bruit sur la mesure d'un décalage spectral du signal renvoyé par le capteur i.

Ces réponses spectrales aplanies sont obtenues en insérant un coupleur à interférences multimode respectif entre une région en sortie du démultiplexeur à réseau de guides d'onde et deux guides d'onde de sortie respectifs. A chaque capteur i correspond un coupleur à interférences multimode et une paire de guides d'onde de sortie, la paire de guides d'onde de sortie formant deux canaux de sortie selon l'invention associés au capteur i. La redistribution d'énergie réalisée par le coupleur à interférences multimode répartit l'énergie du signal provenant du capteur i vers ces deux canaux de sortie dont les réponses spectrales sont aplanies en comparaison avec l'art antérieur.

En fonctionnement, le dispositif de répartition de signal reçoit un signal lumineux d'entrée provenant d'un ensemble d'un ou plusieurs capteurs. Ledit signal lumineux d'entrée est constitué d'une somme de plusieurs signaux de réponse individuels $\sigma_i(t)$, renvoyés chacun par un capteur i respectif. Ces signaux $\sigma_i(t)$ sont séparés les uns des autres grâce au démultiplexeur à réseau de guides d'onde, de sorte que finalement chaque module de réception reçoive un signal $\sigma_i(t)$ provenant d'un capteur respectif i. En l'absence de perturbation externe sur le capteur i, le spectre du signal $\sigma_i(t)$ est centré sur une longueur d'onde nominale $\lambda_{0i}$ dudit capteur. En présence d'une perturbation externe sur le capteur i, le spectre du signal $\sigma_i(t)$ est centré sur une longueur d'onde $\lambda_i(t)$ légèrement décalé relativement à $\lambda_{0i}$. Dans chaque module de réception, le coupleur à interférences multimode répartit ce signal $\sigma_i(t)$ vers les deux guides d'onde de sortie, formant chacun deux canaux de sortie associés au capteur i dans le dispositif selon l'invention. L'un de ces canaux de sortie présente une réponse spectrale centrée sur une longueur d'onde $\lambda_{inf\_i}$ inférieure à $\lambda_{0i}$, où $\lambda_{0i}$ est la longueur d'onde nominale du capteur i. L'autre de ces canaux de sortie présente une réponse spectrale centrée sur une longueur d'onde $\lambda_{sup\_i}$ supérieure à $\lambda_{0i}$. Les réponses spectrales de ces deux canaux de sortie présentent chacune une forme plus étalée, en comparaison avec les réponses spectrales des canaux de sortie dans l'art antérieur. Chacun de ces deux canaux de sortie permet ainsi de récolter plus de signal à la longueur d'onde du signal $\sigma_i(t)$, en comparaison avec l'art antérieur, la longueur d'onde du signal $\sigma_i(t)$ étant comprise entre $\lambda_{inf\_i}$ et $\lambda_{sup\_i}$. Le décalage en longueur d'onde du signal renvoyé par le capteur i est calculé à partir des signaux mesurés sur chacun de ces deux canaux de sortie. Ainsi, les réponses spectrales aplanies de ces deux canaux de sortie permettent d'améliorer le rapport signal sur bruit associé à la détermination de ce décalage en longueur d'onde.

De préférence, dans chaque module de réception, des extrémités respectives des deux guides d'onde de sortie sont situées chacune sur une zone de sortie respective du coupleur à interférences multimode, avec lesdites zones de sortie qui s'étendent de part et d'autre d'un plan de symétrie du coupleur à interférences multimode.

Dans chaque module de réception, lesdites zones de sortie peuvent être symétriques l'une de l'autre relativement au plan de symétrie du coupleur à interférences multimode.

Dans chaque module de réception, lesdites zones de sortie sont avantageusement centrées chacune sur un point situé à une distance inférieure ou égale à 1500 nm relativement à un axe central dudit coupleur à interférences multimode.

De préférence, le dispositif selon l'invention comprend une pluralité de modules de réception disposés les uns à côté des autres en sortie du démultiplexeur à réseau de guides d'onde. Avantageusement, dans chaque module de réception, des extrémités respectives des deux guides d'onde de sortie sont situées chacune sur une zone de sortie respective du coupleur à interférences multimode, et dans chaque module de réception, une distance entre un plan de symétrie du coupleur à interférences multimode et le plan similaire dans un module de réception directement voisin est supérieure ou égale à trois fois la distance entre les centres géométriques respectifs desdites zone de sortie.

L'invention couvre également un système de mesure d'un décalage en longueur d'onde, qui comprend un dispositif de répartition de signal selon l'invention et au moins une paire de photo-détecteurs, chaque paire de photo-détecteurs étant associée à un module de réception respectif du dispositif de répartition de signal selon l'invention, et chaque photo-détecteur de ladite paire étant configuré pour recevoir un signal provenant de l'un respectif parmi les deux guides d'onde de sortie du module de réception correspondant.

Avantageusement, ledit système comporte en outre un calculateur configuré pour recevoir en entrée des signaux de mesure fournis par l'au moins une paire de photo-détecteurs, et pour fournir en sortie, pour chaque module de réception du dispositif de répartition de signal, une mesure d'un décalage en longueur d'onde.

De préférence, pour chaque paire de photo-détecteurs, le calculateur est configuré pour calculer un quotient :

$$\frac{(\alpha'_i - \beta'_i)}{(\alpha'_i + \beta'_i)}$$

avec $\alpha'_i$ désigne le signal fourni par l'un des photo-détecteurs de ladite paire et $\beta'_i$ désigne le signal fourni par l'autre des photo-détecteurs de ladite paire.

Le système selon l'invention peut comporter en outre au moins un capteur couplé optiquement au dispositif de répartition de signal, chaque capteur étant configuré pour traduire un paramètre à mesurer en un décalage en longueur d'onde sur un signal renvoyé par ledit capteur, relativement à une longueur d'onde nominale dudit capteur.

A chaque capteur peut correspondre un module de réception respectif du dispositif de répartition de signal, et dans chaque module de réception les deux guides d'onde de sortie peuvent être configurés pour recevoir des signaux respectifs centrés chacun sur une longueur d'onde respective, où lesdites longueurs d'onde respectives encadrent la longueur d'onde nominale dudit capteur.

De manière avantageuse, le système selon l'invention comprend en outre une fibre optique au sein de laquelle sont inscrits plusieurs réseaux de Bragg qui forment chacun un capteur respectif couplé optiquement au dispositif de répartition de signal.

**BRÈVE DESCRIPTION DES FIGURES**

La présente invention sera mieux comprise à la lecture de la description d'exemples de réalisation donnés à titre purement indicatif et nullement limitatif, en faisant référence aux dessins annexés sur lesquels :

[Fig. 1] illustre de façon schématique les réponses spectrales de deux canaux de sortie affectés au même capteur, dans un dispositif de l'art antérieur ;

[Fig. 2A] illustre de façon schématique un premier mode de réalisation d'un dispositif de répartition de signal selon l'invention ;

[Fig. 2B] illustre de façon schématique un détail de la figure 2A ;

[Fig. 3] illustre un comparatif des réponses spectrales de deux canaux de sortie affectés au même capteur, dans un dispositif de l'art antérieur et dans un dispositif selon l'invention ;

[Fig. 4A] illustre une vue de détail d'un deuxième mode de réalisation d'un dispositif de répartition de signal selon l'invention ;

[Fig. 4B] illustre la réponse spectrale de canaux de sortie définis en sortie de l'AWG montré en figure 4A;

[Fig. 5A] illustre différentes combinaisons des réponses spectrales de deux canaux de sortie affectés au même capteur, dans un dispositif de l'art antérieur ;

[Fig. 5B] illustre différentes combinaisons des réponses spectrales de deux canaux de sortie affectés au même capteur, dans un dispositif selon l'invention ;

[Fig. 6A] illustre de façon schématique un premier mode de réalisation d'un système selon l'invention, comprenant le dispositif de la figure 2A ;

[Fig. 6B] illustre de façon schématique un deuxième mode de réalisation d'un système selon l'invention, comprenant le dispositif de la figure 2A ; et

[Fig. 6C] illustre de façon schématique un troisième mode de réalisation d'un système selon l'invention, comprenant le dispositif de la figure 2A.

**DESCRIPTION DESMODES DE RÉALISATION**

La figure 2A illustre de façon schématique un premier mode de réalisation d'un dispositif 200 de répartition de signal selon l'invention.

Le dispositif 200 est configuré ici pour recevoir en entrée un signal lumineux polychromatique $S_E$ provenant d'un ensemble de trois capteurs (non représenté). Chacun de ces capteurs est configuré pour recevoir un signal lumineux d'interrogation et renvoyer en réponse un signal de réponse centré sur une longueur d'onde respectif $\lambda_1(t)$, $\lambda_2(t)$, respectivement $\lambda_3(t)$. En l'absence de perturbation externe sur le capteur, ledit signal de réponse est centré sur sa longueur d'onde nominale $\lambda_{01}$, $\lambda_{02}$, respectivement $\lambda_{03}$. En présence d'une perturbation externe sur le capteur, ledit signal de réponse est centré sur une longueur d'onde légèrement décalée relativement à sa longueur d'onde nominale respective.

Le dispositif 200 comprend un démultiplexeur à réseau de guides d'onde 210, et une pluralité de modules de réception $220_1$, $220_2$, $220_3$, affectés chacun à l'un des capteurs i mentionnés ci-dessus, où i=1, 2 ou 3.

Dans la suite, le démultiplexeur à réseau de guides d'onde 210 est nommé simplement « AWG », pour l'anglais « Arrayed Waveguide Grating ». Il s'agit d'un dispositif comportant un réseau de guides d'onde $213_1$, $213_2...213_N$, disposé entre deux éléments planaires de guidage 212, respectivement 214. L'un des éléments planaires de guidage, 212, est configuré pour recevoir en entrée un signal lumineux polychromatique $S_E$ et pour étaler spatialement ce signal de manière à le répartir en entrée de chacun des guides d'onde du réseau de guides d'onde. Chaque guide d'onde du réseau de guides d'onde reçoit un signal de même spectre. Les guides d'onde du réseau de guides d'onde présentent des longueurs respectives allant en s'accroissant, depuis un guide d'onde d'extrémité $213_1$ vers un guide d'onde d'extrémité opposée $213_N$. De préférence, la différence de longueur de chemin optique entre deux guides d'onde voisins est égale à un multiple entier d'une longueur d'onde centrale d'utilisation de l'AWG. Les rayons lumineux émergeant des guides d'onde du réseau de guides d'onde se propagent ensuite dans le second élément planaire de guidage 214. En sortie de cet élément planaire de guidage 214, ils se recombinent en des positions qui dépendent de leur longueur d'onde. L'AWG 210 réalise ainsi un étalement spatial des différentes contributions spectrales du signal lumineux polychromatique $S_E$ injecté en entrée. De préférence, la position d'un rayonnement lumineux en sortie de l'AWG est une fonction quasiment linéaire de sa longueur d'onde. L'AWG 210 ne sera pas décrit ici plus avant, car il s'agit d'un dispositif connu dans l'art antérieur.

Ici, l'AWG 210 est configuré pour réaliser une dispersion chromatique sur une plage de longueur d'onde incluant au moins les longueurs d'onde nominales des différents capteurs qui fournissent ensemble le signal lumineux d'entrée que le dispositif selon l'invention est configuré pour traiter.

Chaque module de réception $220_i$ (avec i=1 ou 2 ou 3) comporte un coupleur à interférences multimode $221_i$ et deux guides d'onde de sortie $222_i$, $223_i$.

Le coupleur à interférence multimode $221_i$ est un coupleur optique à X voies d'entrées et Y voies de sortie, constitué d'un tronçon de guide d'onde multimode apte à reproduire à intervalles périodiques le profil d'énergie d'un champ électromagnétique d'entrée. Un tel coupleur est nommé usuellement coupleur MMI, où MMI est l'acronyme pour l'anglais « Multi-Mode interférences ». Il s'agit d'un dispositif bien connu dans l'art antérieur. Selon l'invention, le coupleur MMI $221_i$ est un coupleur 1x2, c'est-à-dire un coupleur à une voie d'entrée et deux voies de sortie. Il présente de préférence une forme de parallélépipède rectangle, avec une face d'entrée disposée en vis-à-vis d'une face de sortie de l'élément planaire de guidage 214, du côté opposé au réseau de guides d'onde. Ici, ladite face d'entrée du MMI $221_i$ est accolée contre l'élément de guidage planaire 214.

Le coupleur MMI $221_i$ est configuré pour recevoir en entrée une partie du signal démultiplexé en longueur d'onde fourni par l'AWG 210. En particulier, le coupleur MMI $221_i$ est configuré pour recevoir en entrée le signal lumineux de réponse renvoyé par le capteur i. Pour cela, la face d'entrée dudit MMI $221_i$ est centrée sur une position, en sortie de l'AWG 210, qui en fonctionnement reçoit les rayons lumineux à la longueur d'onde nominale $\lambda_{0i}$ du capteur i. Afin de pouvoir récolter tout le signal lumineux de réponse renvoyé par le capteur i, même lorsque ce capteur *i* renvoie un signal légèrement décalé en longueur d'onde relativement à sa longueur d'onde nominale, la face d'entrée du coupleur MMI $221_i$ présente de préférence une largeur supérieure ou égale à $\lambda_{0i}/2$ (dimensions selon l'axe d'étalement des longueurs d'onde, en sortie de l'AWG). Par exemple, cette largeur est de préférence supérieure à 1 $\mu$m. Cette largeur peut être comprise entre $\lambda_{0i}/2$ et $10*\lambda_{0i}$, ce qui permet de continuer à recevoir le signal lumineux de réponse renvoyé par le capteur i lorsque ce signal est décalé en longueur d'onde par une perturbation externe sur ledit capteur, sans pour autant recevoir les signaux renvoyés par d'autres capteurs que le capteur i. Par exemple, cette largeur peut être comprise entre 1 $\mu$m et 10 $\mu$m.

Le coupleur MMI $221_i$ est configuré pour répartir la lumière qu'il reçoit en entrée, vers les guides d'onde de sortie $222_i$, $223_i$. En d'autres termes, le coupleur MMI $221_i$ est configuré pour réaliser un couplage optique entre la zone en sortie de l'AWG qui reçoit le signal provenant du capteur i, et les guides d'onde de sortie $222_i$, $223_i$. Ces guides d'onde de sortie $222_i$, $223_i$ sont de préférence des guides d'onde monomode. Ici, ils ont chacun une extrémité accolée directement contre une face de sortie coupleur MMI $221_i$. Le coupleur MMI $221_i$ se trouve ainsi intercalé entre l'AWG 210 et les guides d'onde de sortie $222_i$, $223_i$, avec un bord accolé directement à l'élément de guidage planaire 214 et un autre bord accolé directement à des extrémités respectives des guides d'onde de sortie $222_i$, $223_i$.

La figure 2B illustre un coupleur MMI $221_i$ du dispositif de répartition de signal 200. On définit dans ce coupleur MMI $221_i$ un plan de symétrie $P_i$, sensiblement parallèle au sens de propagation de la lumière dans ledit coupleur et orthogonal à un plan s'étalement des longueurs d'onde en sortie de l'AWG 210. On définit également sur ce coupleur MMI $221_i$ deux zones de sortie $22_i$, respectivement $23_i$, contre lesquelles sont accolées les extrémités respectives des guides d'onde de sortie $222_i$, respectivement $223_i$. Chaque zone de sortie $22_i$, respectivement $23_i$, correspond à la projection de l'extrémité côté MMI du guide d'onde de sortie $222_i$, respectivement $223_i$.

Les zones de sortie $22_i$, respectivement $23_i$, s'étendent chacune d'un côté respectif du plan de symétrie $P_i$. En d'autres termes, le coupleur MMI $221_i$ a ses deux voies de sortie situées de part et d'autre du plan de symétrie $P_i$. La position du plan de symétrie $P_i$ correspond avantageusement à la longueur d'onde nominale $\lambda_{0i}$ du capteur i associé au coupleur MMI $221_i$. Les guides d'onde de sortie $222_i$, $223_i$, sont alors configurés pour recevoir chacun un signal centré sur une longueur d'onde respective, lesdites longueurs d'onde respectives encadrant cette longueur d'onde nominale $\lambda_{0i}$.

De manière optionnelle mais avantageuse, les zones de sortie $22_i$, respectivement $23_i$, sont sensiblement symétriques l'une de l'autre relativement au plan de symétrie $P_i$. En d'autres termes, le coupleur MMI $221_i$ a ses deux voies de sortie sensiblement symétriques l'une de l'autre relativement au plan de symétrie $P_i$. Par sensiblement symétrique, on entend notamment que la distance entre le centre géométrique de la zone de sortie $22_i$ et le plan de symétrie $P_i$ est égale à la distance entre le centre géométrique de la zone de sortie $23_i$ et le plan de symétrie $P_i$, à plus ou moins 20% près, et même à plus ou moins 10% près, voire même à plus ou moins 5% près. La position du plan de symétrie $P_i$ correspond avantageusement à la longueur d'onde nominale $\lambda_{0i}$ du capteur i associé au coupleur MMI $221_i$. Les guides d'onde de sortie $222_i$, $223_i$, sont alors configurés pour recevoir chacun un signal centré sur une longueur d'onde respective, où la moyenne de ces deux longueurs d'onde respective est égale à ladite longueur d'onde nominale $\lambda_{0i}$.

De façon avantageuse, les zones de sortie $22_i$, respectivement $23_i$, s'étendent chacune d'un côté respectif du plan de symétrie $P_i$, avec leurs centres géométriques respectifs $C1_i$, $C2_i$ très proches l'un de l'autre. Par exemple, la distance $d1_i$, respectivement $d2_i$, entre le centre géométrique $C1_i$, respectivement $C2_i$, et un axe central $A_i$ du coupleur MMI $221_i$, est inférieure ou égale à 2 $\mu$m, voire inférieure ou égale à 1,5 $\mu$m et même inférieure ou égale à 1 $\mu$lm. La position du plan de symétrie $P_i$ correspond avantageusement à la longueur d'onde nominale $\lambda_{0i}$ du capteur i associé au coupleur MMI $221_i$. Les guides d'onde de sortie $222_i$, $223_i$, sont alors configurés pour recevoir chacun un signal centré sur une longueur d'onde respective très proche de ladite longueur d'onde nominale $\lambda_{0i}$.

Les différents modules de réception $220_i$ du dispositif de répartition de signal 200 sont identiques entre eux, exceptée leur position le long de l'élément de guidage planaire 214.

Dans chacun des modules de réception $220_i$, les guides d'onde de sortie $222_i$, respectivement $223_i$, définissent ensemble deux canaux de sortie du dispositif selon l'invention, affectés au même capteur i.

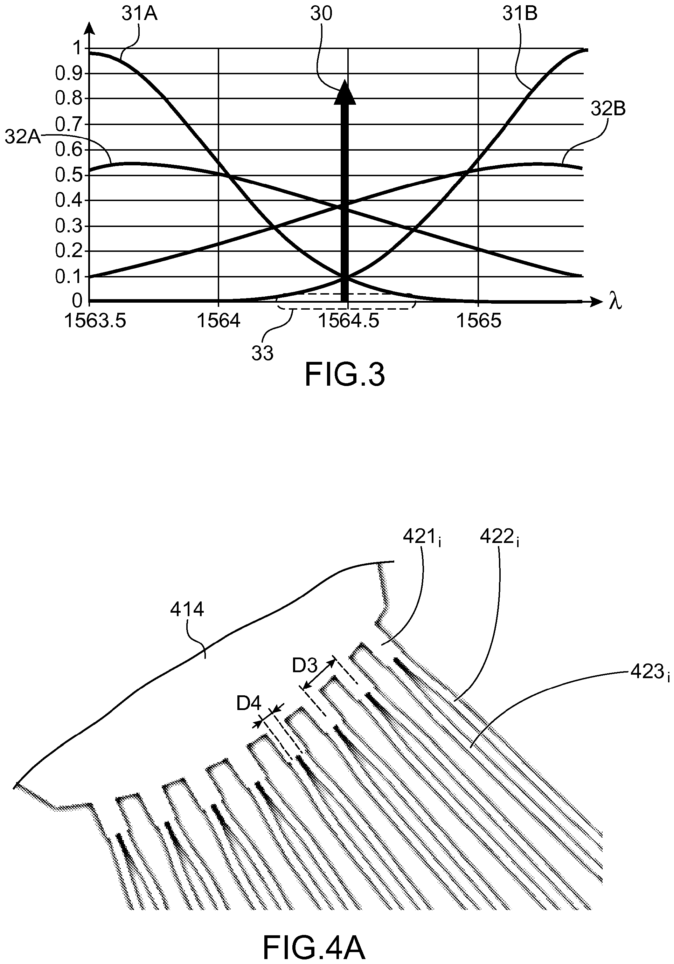

La figure 3 illustre les réponses spectrales respectives des deux canaux de sortie affectés au même capteur, dans un dispositif de l'art antérieur et dans un dispositif selon l'invention. L'axe des abscisses est une longueur d'onde $\lambda$, en nm. L'axe des ordonnées est un taux de transmission, entre zéro et l'unité.

Dans l'art antérieur, ces deux canaux de sortie s'étendent chacun directement en sortie de l'AWG. Les courbes 31A, 31B illustrent les réponses spectrales de tels canaux de sortie.

Dans l'invention, ces deux canaux de sortie correspondent aux deux guides d'onde de sortie couplés à un même coupleur MMI. Les courbes 32A, 32B illustrent les réponses spectrales ces deux canaux de sortie. Ces réponses spectrales présentent chacune un profil plus aplati, en comparaison avec l'art antérieur.

La flèche 30 représente la longueur d'onde nominale $\lambda_{0i}$ du capteur i. Lorsque le capteur i est perturbé par l'apparition d'un défaut dans son milieu environnant, il renvoie un signal centré sur une longueur d'onde légèrement décalée relativement à $\lambda_{0i}$, mais toujours proche de $\lambda_{0i}$. Le signal renvoyé par le capteur i se trouve donc le plus souvent dans une plage spectrale 33 étroite encadrant la longueur d'onde $\lambda_{0i}$. La largeur de la plage spectrale 33 est par exemple d'environ 1 nm. Dans cette plage spectrale, les réponses spectrales des deux canaux de sortie affectés au capteur i sont de plus grande amplitude dans l'invention que dans l'art antérieur. On mesure donc un signal de plus grande amplitude sur chacun de ces deux canaux de sortie, ce qui permet d'obtenir un meilleur rapport signal sur bruit pour la mesure d'un décalage en longueur d'onde, en comparaison avec l'art antérieur.

Selon l'invention, il faut donc que pour chaque capteur i, le signal lumineux renvoyé par ledit capteur reste dans une plage utile respective de chacun des deux canaux de sortie associés à ce dernier. Plus particulièrement, il faut que la longueur d'onde centrale du signal renvoyé par le capteur i reste sur un flanc des réponses spectrales respectives de chacun de ces deux canaux de sortie (à distance du sommet, pour chacune de ces réponses spectrales). Idéalement, et du fait notamment des variations de température ambiante auxquelles le capteur i peut être soumis, la largeur spectrale desdites plages utiles est comprise entre 1 nm et 2 nm (où pour chaque canal de sortie associé audit capteur, la plage utile correspondantes s'étend sur un flanc de la réponse spectrale du canal de sortie, à distance du sommet). On remarque qu'en revanche, les variations de longueur d'onde mesurées à l'aide du dispositif selon l'invention sont beaucoup plus faibles, de quelques pm à quelques fractions de pm (où 1 pm=$10^{-12}$m).

De préférence, l'AWG du dispositif selon l'invention est configuré pour offrir des canaux de sortie très rapprochés les uns des autres, directement à sa sortie, et chaque coupleur $MMI_i$ associé à un capteur i est configuré pour recevoir en entrée un signal correspondant au signal fourni sur deux canaux de sortie voisins parmi ces canaux de sortie de l'AWG. La grande proximité physique entre les deux canaux de sortie de l'AWG couplés à un même coupleur $MMI_i$ correspond à un faible décalage en longueur d'onde de leurs réponses spectrales respectives. De préférence, lesdites réponses spectrales sont centrées chacune sur des valeurs centrales respectives très proches l'une de l'autre, et très proches de la longueur d'onde nominale $\lambda_{0i}$ du capteur i. Cela permet de faire entrer beaucoup de signal dans le coupleur $MMI_i$ associé au capteur i, et d'améliorer encore le rapport signal sur bruit associé à la mesure de décalage en longueur d'onde. Par exemple, dans chaque paire de deux canaux de sortie voisins de l'AWG, lesdits canaux de sortie voisins ont leurs réponses spectrales respectives espacées d'une distance spectrale comprise entre 0,01 nm et 10 nm, plus préférentiellement comprise entre 1 et 2 nm.

De préférence, deux canaux de sortie voisins de l'AWG, couplés à un MMI dans le dispositif selon l'invention, sont espacés deux à deux par deux canaux de sortie de l'AWG non couplés à un MMI.

Un tel mode de réalisation d'un dispositif selon l'invention est illustré en figure 4A. La figure 4A illustre une vue de détail d'un deuxième mode de réalisation d'un dispositif de répartition de signal selon l'invention. La figure 4A montre en particulier une partie de l'élément planaire de guidage 414 appartenant à l'AWG, ainsi qu'une pluralité de coupleurs MMI $421_i$ accolés contre un bord dudit élément planaire de guidage 414, et pour chaque coupleur MMI $421_i$ une paire de deux guides d'onde de sortie $422_i$, $423_i$.

On définit une distance D3, qui correspond au pas de répartition des MMI $421_i$ dans le dispositif selon l'invention. D3 correspond à la distance entre les plans de symétrie respectifs de deux coupleurs MMI voisins dans le dispositif selon l'invention.

On définit également une distance D4, qui correspond à la distance, dans chaque coupleur MMI $421_i$, entre les centres géométriques des deux voies de sortie dudit coupleur. En d'autres termes, D4 correspond à la distance entre les centres géométriques respectifs de deux zones de sortie dudit coupleur, où chaque zone de sortie correspond à la surface du coupleur recouverte par l'extrémité de l'un des guides d'onde de sortie.

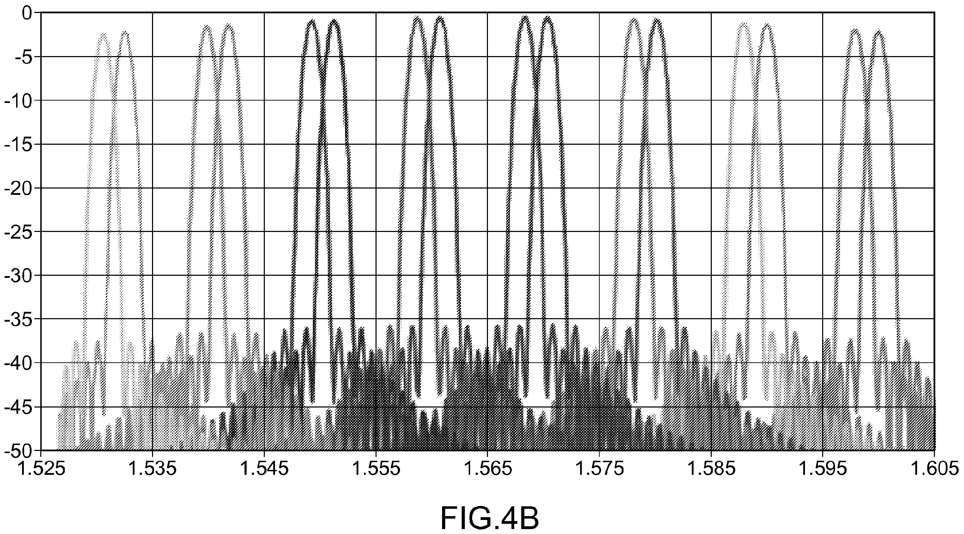

Ici, l'AWG est configuré pour offrir au maximum 32 canaux de sortie très rapprochés, ces canaux de sortie étant définis directement à la sortie de l'AWG. Parmi ces 32 canaux, 8 paires ont été sélectionnées. La figure 4B illustre les réponses spectrales desdites 8 paires sélectionnées. Les 8 paires sélectionnées sont séparées deux à deux par une paire non sélectionnée. Chaque coupleur MMI $421_i$ est configuré pour recevoir en entrée un signal correspondant au signal sur l'une respective parmi ces 8 paires sélectionnées. Par conséquent, la distance D3 est égale à quatre fois la distance D4.

En tout état de cause, la distance D3 est de préférence supérieure à la distance D4, avec un rapport strictement supérieur à 2, et même strictement supérieur à 3 entre ces deux distances.

Selon l'invention, la mesure $M'_i$ d'un décalage de la longueur d'onde renvoyée par un capteur i vers le dispositif de répartition de signal, est donnée par :

$$M'_i = \frac{(\alpha'_i - \beta'_i)}{(\alpha'_i + \beta'_i)} \qquad (2)$$

avec $\alpha'_i$ le signal mesuré sur un canal de sortie $A'_i$ et $\beta'_i$ le signal mesuré sur un canal de sortie $B'_i$ du dispositif selon l'invention, où $A'_i$ et $B'_i$ sont deux canaux de sortie du dispositif selon l'invention affectés au capteur i. Ces canaux de sortie correspondent aux deux guides d'onde de sortie du module de réception associé au capteur i.

De façon similaire, dans l'art antérieur, la mesure $M_i$ d'un décalage de la longueur d'onde renvoyée par un capteur i vers un dispositif tel que décrit en introduction, est donnée par :

$$M_i = \frac{(\alpha_i - \beta_i)}{(\alpha_i + \beta_i)} \qquad (3)$$

avec $\alpha_i$ le signal mesuré un canal de sortie $A_i$ et $\beta_i$ le signal mesuré sur un canal de sortie $B_i$, où $A_i$ et $B_i$ sont deux canaux de sortie de l'AWG affectés au capteur i.

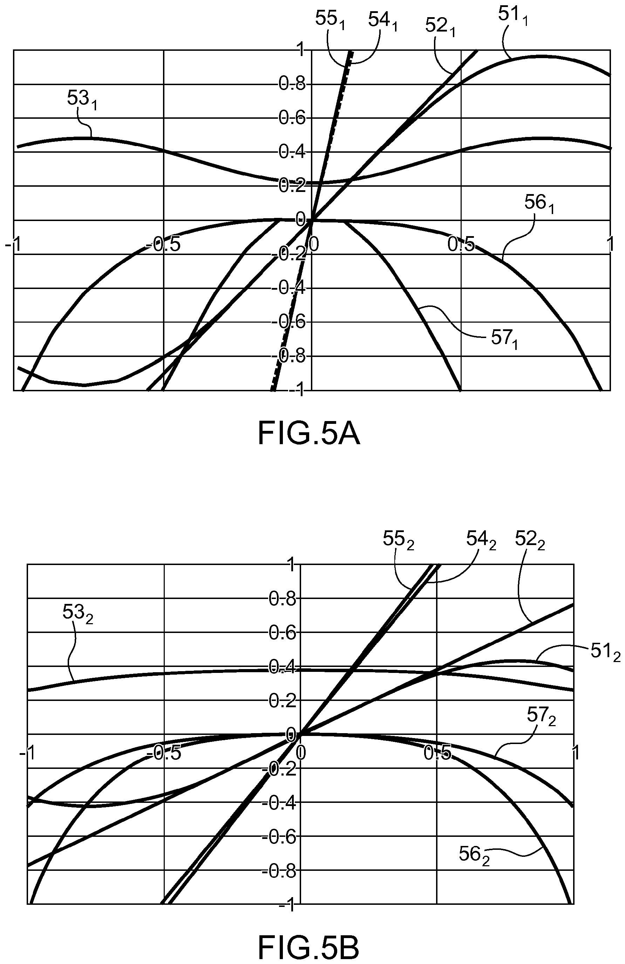

La figure 5A illustre différentes combinaisons des réponses spectrales $S_{Ai}$, $S_{Bi}$ des deux canaux de sortie $A_i$, $B_i$, dans un dispositif de l'art antérieur tel que décrit en introduction. L'axe des abscisses est une différence de longueur d'onde, relativement à la longueur d'onde nominale $\lambda_{0i}$ du capteur i. L'axe des ordonnées est un taux de transmission entre zéro et l'unité, ou une grandeur sans unité.

La courbe $51_1$ illustre le signal S1= $S_{Ai}$- $S_{Bi}$.

La droite $52_1$ correspond à la droite la plus proche de la courbe $51_1$, tangente à la courbe $51_1$ en $\lambda$= $\lambda_{0i}$.

La courbe $53_1$ illustre le signal S2= $S_{Ai}+S_{Bi}$.

La courbe $54_1$ illustre le signal S1/S2, correspondant à la mesure $M_i$, dans l'art antérieur, du décalage en longueur d'onde sur un signal renvoyé par un capteur i.

La droite $55_1$ est la droite la plus proche de la courbe $54_1$.

La courbe $56_1$ illustre l'écart de la courbe $51_1$ (signal S1) relativement à la droite $52_1$. La courbe $56_1$ illustre donc la linéarité du signal S1.

La courbe $57_1$ illustre l'écart de la courbe $54_1$ (signal S1/S2) relativement à la droite $55_1$. La courbe $57_1$ illustre donc la linéarité, dans l'art antérieur, de la mesure $M_i$ du décalage en longueur d'onde sur un signal renvoyé par un capteur i.

La figure 5B illustre les signaux correspondant, dans le cas d'un dispositif de répartition de signal selon l'invention. La figure 5B illustre ainsi différentes combinaisons des réponses spectrales $S'_{Ai}$, $S'_{Bi}$ des deux canaux de sortie $A'_i$, $B'_i$. Là encore, l'axe des abscisses est une différence de longueur d'onde, relativement à la longueur d'onde nominale $\lambda_{0i}$ du capteur i. L'axe des ordonnées est un taux de transmission entre zéro et l'unité, ou une grandeur sans unité.

La courbe $51_2$ illustre le signal S1'= $S'_{Ai}- S'_{Bi}$,

La droite $52_2$ correspond à la droite la plus proche de la courbe $51_2$, tangente à la courbe $51_2$ en $\lambda= \lambda_{0i}$.

La courbe $53_2$ illustre le signal S2'= $S'_{Ai}+S'_{Bi}$.

La courbe $54_2$ illustre le signal S1'/S2', correspondant à la mesure $M'_i$ du décalage en longueur d'onde sur un signal renvoyé par un capteur i, dans un dispositif selon l'invention.

La droite $55_2$ correspond à la droite la plus proche de la courbe $54_2$, tangente à la courbe $54_2$ en $\lambda= \lambda_{0i}$.

La courbe $56_2$ illustre l'écart de la courbe $51_2$ (signal S1') relativement à la droite $52_2$. La courbe $56_2$ illustre donc la linéarité du signal S1'.

La courbe $57_2$ illustre l'écart de la courbe $54_2$ (signal S1'/S2') relativement à la droite $55_2$. La courbe $57_2$ illustre donc la linéarité de la mesure $M'_i$ du décalage en longueur d'onde sur un signal renvoyé par un capteur i, dans un dispositif selon l'invention.

La comparaison des figures 5A et 5B permet de mettre en évidence plusieurs avantages apportés par le dispositif selon l'invention.

En particulier, la comparaison de la courbe $53_1$ de la figure 5A avec la courbe $53_2$ de la figure 5B montre que l'invention augmente la quantité de signal collectée à la longueur d'onde nominale $\lambda_{0i}$ du capteur i et autour de cette longueur d'onde. Le rapport signal sur bruit, qui dépend de la quantité de signal collectée, est donc augmenté.

En outre, la comparaison de la courbe $57_1$ de la figure 5A avec la courbe $57_2$ de la figure 5B montre que, grâce à une meilleure récupération de la lumière, l'invention augmente la plage de linéarité de la mesure d'un décalage en longueur d'onde d'un signal renvoyé par un capteur i.

Cette plage de linéarité est augmentée en comparaison avec un dispositif selon l'art antérieur dont l'AWG présente les mêmes caractéristiques. En variante, on peut donc utiliser dans l'invention un AWG plus dispersif que dans l'art antérieur, et conserver une plage de linéarité au moins aussi large que dans l'art antérieur. L'AWG étant plus dispersif, il est plus sensible à toute variation de la longueur d'onde du signal renvoyé par le capteur i. On peut ainsi obtenir un dispositif offrant une plus grande sensibilité de la mesure d'un décalage en longueur d'onde, sur une plage spectrale au moins identique.

En complément ou en variante, cette plus grande plage de linéarité peut être utilisée pour augmenter une plage de longueurs d'onde mesurables, permettant par exemple de mesurer des décalages de plus grande amplitude.

On illustre ensuite différents exemples de système comportant un dispositif de répartition de signal selon l'invention.

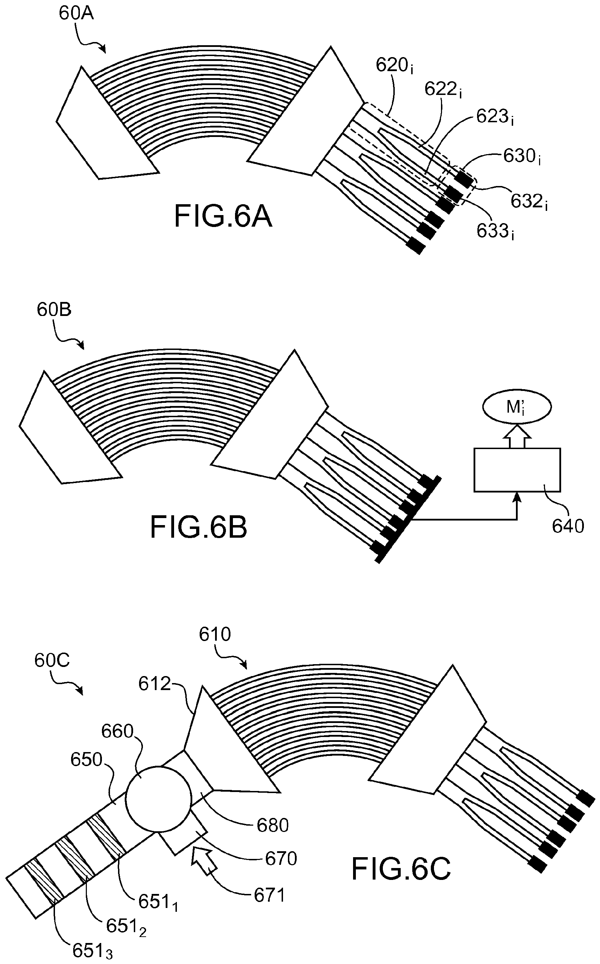

La figure 6A illustre de façon schématique un premier mode de réalisation d'un tel système 60A, comprenant un dispositif de répartition de signal tel que décrit en référence aux figures 2A et 2B, et, pour chaque module de réception $620_i$ dudit dispositif, une paire $630_i$ de photo-détecteurs $632_i$, $633_i$. Ainsi, chaque module de réception $620_i$ est associé à une paire $630_i$ de photo-détecteurs, dans lequel un premier photo-détecteur $632_i$ reçoit un signal d'un premier guide d'onde de sortie $622_i$ dudit module et un second photo-détecteur $633_i$ reçoit un signal d'un second guide d'onde de sortie $623_i$ dudit module.

Les différentes paires $630_i$ de photo-détecteurs peuvent correspondre aux photo-détecteurs d'une même barrette de photo-détecteurs, accolée directement en sortie d'une puce sur laquelle est réalisé le dispositif de répartition de signal. En variante, les photo-détecteurs peuvent être des photo-détecteurs discrets, reliés chacun à une puce sur laquelle est réalisé le dispositif de répartition de signal par une fibre optique respective.

La figure 6B illustre de façon schématique un deuxième mode de réalisation d'un système 60B, qui ne diffère du système de la figure 6A qu'en ce qu'il comporte en outre un calculateur 640, ou processeur, relié auxdits photo-détecteurs et configuré pour recevoir en entrée des signaux de mesure respectifs fournis par chacun de ces détecteurs. Le calculateur est configuré pour réaliser un traitement de ces différents signaux de manière à déterminer, pour chaque paire de photo-détecteurs, une mesure $M'_i$ d'un décalage en longueur d'onde. Ladite mesure est déterminée en mettant en oeuvre les calculs définis ci-dessus, en particulier à l'équation (2).

La figure 6C illustre de façon schématique un deuxième mode de réalisation d'un système 60C, qui ne diffère du système de la figure 6A qu'en ce qu'il comporte en outre une fibre optique 650 dont l'une extrémité est couplée optiquement à l'entrée de l'AWG 610, ici par l'intermédiaire d'un circulateur optique 660. Plusieurs réflecteurs $651_1$, $651_2$, $651_3$, de type réseau de Bragg, sont inscrits dans la fibre optique 650.

Le circulateur optique 660 est couplé à trois voies de circulation formées respectivement par la fibre optique 650, une fibre d'injection 670 configurée pour transporter un signal lumineux polychromatique 671, et un tronçon de guide d'onde 680 s'étendant entre le circulateur optique 660 et l'entrée du dispositif selon l'invention (au niveau d'un bord de l'élément planaire de guidage 612, du côté opposé au réseau de guides d'onde dans l'AWG 610). Le circulateur optique 660 est configuré pour transmettre, vers la fibre optique 650, le signal lumineux polychromatique 671 arrivant de la fibre d'injection 670, et pour transmettre, vers le tronçon de guide d'onde 680 en entrée du dispositif selon l'invention, un signal lumineux renvoyé par la fibre optique 650.

Les réflecteurs $651_1$, $651_2$, $651_3$ forment chacun un capteur respectif, présentant chacun une longueur d'onde nominale respective $\lambda_{01}$, $\lambda_{02}$, respectivement $\lambda_{03}$. Le signal lumineux réfléchi, renvoyé par la fibre optique 650, correspond à la somme des signaux individuels renvoyés simultanément par chacun desdits réflecteurs. Dans le dispositif de répartition de signal, chaque module de réception est associé à l'un des réflecteurs $651_1$, $651_2$, respectivement $651_3$. Selon une variante non représentée, le système de la figure 6C comporte en outre un calculateur tel que décrit en référence à la figure 6B.

Selon d'autres variantes encore, le système selon l'invention comporte une source lumineuse large spectre, configurée pour fournir un signal lumineux polychromatique en entrée d'un réseau de capteurs (par exemple en entrée de la fibre optique 650 munie des réflecteurs $651_1$, $651_2$, $651_3$ telle que décrite ci-dessus). Les capteurs sont configurés pour recevoir chacun au moins une partie de ce signal lumineux polychromatique émis par la source lumineuse large spectre, et pour fournir en réponse un signal de réponse qui est guidé jusqu'en entrée du dispositif selon l'invention. La source lumineuse large spectre est par exemple une diode superluminescente. Sa densité spectrale de puissance présente une largeur à mi-hauteur supérieure ou égale à 50 nm et même plus.

De manière avantageuse, le dispositif et le système selon l'invention sont configurés chacun pour traiter des signaux aux longueurs d'onde standard du domaine des télécommunications, entre 1500 nm et 1600 nm. Cela permet d'utiliser des composants couramment disponibles sur le marché.

On utilise par exemple un AWG de dimension 5 mm par 4 mm, comportant un réseau de 121 guides d'onde, et conçu pour un maximum de 32 canaux de sortie très rapprochés parmi lesquels on utilise 8 paires de canaux. Un tel AWG est configuré pour offrir une dispersion chromatique définie par environ 1 $\mu$m de déplacement latéral dans un plan focal de sortie par nanomètre de décalage en longueur d'onde autour de 1500 nm.

Chaque MMI présente par exemple une longueur de 6,65 $\mu$m (dimension dans le sens de propagation de la lumière dans le MMI) pour une largeur de 3,6 $\mu$m (dimension selon l'axe de dispersion chromatique par l'AWG). Les guides d'onde de sortie, en sortie du MMI, présentent par exemple chacun une largeur de 800 nm. Ils ont chacun leur centre espacé de 1 $\mu$m relativement à un axe central du MMI, au niveau de leurs extrémités respectives accolées au MMI.

Les guides d'onde de sortie sont de préférence des guides à section rectangulaire en nitrure de silicium noyés dans de la silice. Il s'agit de préférence de guides monomode autour de 1500 nm, avec une section de côté compris entre 400 nm et 900 nm, par exemple 800 nm de large par 500 nm de haut, ou une section carrée de 600 nm par 600 nm. De tels guides d'onde de sortie sont réalisés par exemple à partir d'un substrat en silicium, sur lequel on dépose une couche de silice puis une couche de nitrure de silicium ($Si_3N_4$) déposée par dépôt chimique en phase vapeur assisté par plasma ou dépôt chimique en phase vapeur à basse pression. On peut aussi déposer une couche de silice sur la face arrière du substrat, pour limiter ses déformations mécaniques. On grave ensuite la couche de nitrure de silicium par lithogravure et gravure par ions réactifs, pour y définir les guides d'onde de sortie selon l'invention. Ensuite, on recouvre ces guides d'onde d'une nouvelle couche de silice.

Des simulations d'un dispositif selon l'invention présentant ces caractéristiques montrent qu'il permet de récolter deux fois plus de lumière, pour chaque capteur i et en comparaison avec l'art antérieur dans lequel les paires de guides d'onde de sortie sont disposées directement à la sortie de l'AWG.

L'invention trouve une application particulièrement avantageuse pour la surveillance multipoint de structures mécaniques, appliquée à des domaines tels que l'aéronautique, le transport terrestre et le transport maritime. De préférence, on dispose une ou plusieurs fibres optiques au sein de la structure mécanique à surveiller, avec des réflecteurs de type réseau de Bragg inscrits dans chacune de ces fibres optiques. Dans chaque fibre optique, les réflecteurs présentent, au repos, une longueur d'onde de réflexion respective nommée longueur d'onde nominale. L'apparition d'un défaut mécanique dans la structure génère une modification de la longueur d'onde de réflexion d'un ou plusieurs réflecteurs (liée par exemple à une modification d'indice ou de périodicité dans le réseau de Bragg). En utilisation, on injecte en entrée de la fibre optique un signal lumineux polychromatique dont le spectre recouvre les longueurs d'onde nominales respectives de chacun des réflecteurs inscrits dans ladite fibre. La fibre optique renvoie, en réponse, un signal réfléchi qui est la somme de signaux individuels réfléchis par chacun des réflecteurs. Le dispositif selon l'invention permet de réaliser, à partir de ce signal réfléchi, une mesure simultanée d'une pluralité de décalages en longueurs d'onde associés à chacun des réflecteurs (le décalage mesuré pouvant être nul, en particulier en l'absence de défaut de structure à proximité du réflecteur correspondant).

Le cas échéant, les réseaux de Bragg inscrits dans la fibre optique peuvent former des récepteurs acoustiques. Dans ce cas, on envoie dans la structure mécanique des ondes ultrasonores qui se propagent dans la structure jusqu'à atteindre chacun des réseaux de Bragg. La présence de défauts dans la structure modifie les caractéristiques de l'onde ultrasonore et donc son effet sur le réseau de Bragg qui la reçoit.

L'invention n'est pas limitée aux exemples décrits ci-avant, et de nombreuses variantes peuvent être mises en oeuvre sans sortir du cadre de l'invention.

En particulier, le dispositif selon l'invention peut être configuré pour réaliser la mesure d'un signal provenant d'un seul capteur, et ne comporter qu'un seul module de réception. Selon d'autres variantes, le dispositif selon l'invention peut être configuré pour recevoir des signaux provenant d'au moins un capteur de type micro-résonateur en anneau, ou de type cavité Fabry-Pérot, ou tout autre capteur formant un transducteur configuré pour traduire une valeur d'un paramètre à mesurer en une valeur de décalage en longueur d'onde sur un signal de sortie.

L'invention n'est pas non plus limitée aux dimensions et longueurs d'onde d'utilisation mentionnées ci-dessus. De même, on pourrait réaliser des variantes de l'invention dans lesquelles les guides d'onde de sortie ne sont pas accolés directement contre le coupleur MMI correspondant, séparés de ce dernier par un adaptateur. De même, on pourrait réaliser des variantes de l'invention dans lesquelles le ou les coupleur(s) MMI ne sont pas accolés directement contre la sortie de l'AWG, séparés de ce dernier par un adaptateur, par exemple un épanouisseur (communément appelé « taper » en anglais).

On remarque que dans tout le texte, on parle d'une mesure d'un décalage de longueur d'onde. Il s'agit à chaque fois d'un décalage relativement à la longueur d'onde nominale d'un capteur. En outre, il s'agit d'une mesure indirecte puisque l'on mesure deux signaux qui sont ensuite combinés pour calculer une valeur dudit décalage en longueur d'onde.

On peut remarquer qu'il existe, dans le domaine des télécommunications, des dispositifs de démultiplexage structurellement assez proches du dispositif selon l'invention, avec un AWG et un coupleur MMI respectif intercalé entre chaque canal de sortie de l'AWG et un guide d'onde de sortie. Un tel dispositif est décrit notamment par P. Muñoz & al., dans l'article « Analysis and design of arrayed waveguide gratings with MMI couplers », Optics Express, Vol. 9, N°7, 24 septembre 2001. Les coupleurs MMI couplent alors chacun un unique canal de sortie de l'AWG avec un unique guide d'onde de sortie, et ne présentent pas chacun deux voies de sortie distinctes l'une de l'autre. En outre, de tels dispositifs ont pour but d'améliorer un démultiplexage en longueur d'onde (meilleure isolation entre les canaux de sortie et aplatissement de la réponse spectrale de chaque canal de sortie), et non de mesurer des décalages en longueur d'onde à l'aide de deux canaux de sortie distincts.

On peut également remarquer que des résultats intéressants peuvent être obtenus à l'aide d'un dispositif dépourvu de coupleur MMI, dans lequel chaque paire de guides d'onde de sortie est disposée directement en sortie de l'AWG, avec les deux guides d'onde de sortie d'une même paire disposés au plus proche l'un de l'autre à la sortie de l'AWG. Les deux guides d'onde de sortie correspondent alors à deux canaux de sortie de l'AWG, dont les réponses spectrales respectives sont faiblement décalées en longueur d'onde. Chaque paire de guides d'onde est associée à un capteur i de longueur d'onde nominale $\lambda_{0i}$, où $\lambda_{0i}$ prend une valeur intermédiaire entre les longueurs d'onde centrales de ces deux réponses spectrales. Le faible décalage en longueur d'onde entre ces deux réponses spectrales permet de récolter beaucoup de signal à la longueur d'onde $\lambda_{0i}$ et autour de cette longueur d'onde.

## Revendications

1. Dispositif (200) de répartition de signal, destiné à la mesure d'au moins un décalage en longueur d'onde, et comprenant un démultiplexeur à réseau de guides d'onde (210 ; 610) configuré pour séparer spatialement les contributions spectrales d'un signal optique d'entrée ($S_E$), et au moins un module de réception ($220_1$; $220_2$; $220_3$; $620_i$), chaque module de réception comprenant un coupleur à interférences multimode ($221_1$ ; $221_2$; $221_3$; $221_i$; $421_i$) et deux guides d'onde de sortie ($222_1$, $223_1$; $222_2$, $223_2$ ; $222_3$, $223_3$; $222_i$; $223_i$; $422_i$; $423_i$; $622_i$, $623_i$), avec le coupleur à interférences multimode ($221_1$; $221_2$; $221_3$; $221_i$; $421_i$) situé entre le démultiplexeur à réseau de guides d'onde (210 ; 610) et les deux guides d'onde de sortie $222_1$, $223_1$; $222_2$, $223_2$; $222_3$, $223_3$ ; $222_i$, $223_i$ ; $422_i$, $423_i$; $622_i$, $623_i$) et configuré pour répartir dans les deux guides d'onde de sortie un signal optique provenant du démultiplexeur à réseau de guides, **caractérisé en ce que** ledit coupleur à interférences multimode ($221_1$ ; $221_2$; $221_3$; $221_i$; $421_i$) est accolé directement contre le démultiplexeur à réseau de guides d'onde (210 ; 610) ou séparé de ce dernier par un adaptateur de type taper.

2. Dispositif (200) selon la revendication 1, **caractérisé en ce que** dans chaque module de réception, des extrémités respectives des deux guides d'onde de sortie sont situées chacune sur une zone de sortie respective ($22_i$ ; $23_i$) du coupleur à interférences multimode ($221_i$), avec lesdites zones de sortie qui s'étendent de part et d'autre d'un plan

de symétrie ($P_i$) du coupleur à interférences multimode ($221_i$).

3. Dispositif (200) selon la revendication 2, **caractérisé en ce que** dans chaque module de réception, lesdites zones de sortie ($22_i$ ; $23_i$) sont symétriques l'une de l'autre relativement au plan de symétrie ($P_i$) du coupleur à interférences multimode ($221_i$).

4. Dispositif (200) selon la revendication 2 ou 3, **caractérisé en ce que** dans chaque module de réception, lesdites zones de sortie ($22_i$; $23_i$) sont centrées chacune sur un point ($C1_i$ ; $C2_i$) situé à une distance inférieure ou égale à 1500 nm relativement à un axe central (Ai) dudit coupleur à interférences multimode ($221_i$).

5. Dispositif (200) selon l'une quelconque des revendications 1 à 4, **caractérisé en ce qu'**il comprend une pluralité de modules de réception ($220_1$ ; $220_2$; $220_3$; $620_i$) disposés les uns à côté des autres en sortie du démultiplexeur à réseau de guides d'onde (210 ; 610).

6. Dispositif (200) selon la revendication 5, **caractérisé en ce que** dans chaque module de réception, des extrémités respectives des deux guides d'onde de sortie ($422_i$ ; $423_i$) sont situées chacune sur une zone de sortie respective du coupleur à interférences multimode ($421_i$), et **en ce que** dans chaque module de réception, une distance (D3) entre un plan de symétrie du coupleur à interférences multimode ($421_i$) et le plan similaire dans un module de réception directement voisin est supérieure ou égale à trois fois la distance (D4) entre les centres géométriques respectifs desdites zone de sortie.

7. Système de mesure (60A; 60B ; 60C) d'un décalage en longueur d'onde, **caractérisé en ce qu'**il comprend un dispositif de répartition de signal selon l'une quelconque des revendications 1 à 6 et au moins une paire ($630_i$) de photo-détecteurs ($632_i$, $633_i$), chaque paire ($630_i$) de photo-détecteurs étant associée à un module de réception ($620_i$) respectif du dispositif de répartition de signal, et chaque photo-détecteur ($632_i$; $633_i$) de ladite paire étant configuré pour recevoir un signal provenant de l'un respectif parmi les deux guides d'onde de sortie ($622_i$; $623_i$) du module de réception correspondant ($620_i$).

8. Système (60B) selon la revendication 7, **caractérisé en ce qu'**il comporte en outre un calculateur (640) configuré pour recevoir en entrée des signaux de mesure fournis par l'au moins une paire de photo-détecteurs, et pour fournir en sortie, pour chaque module de réception du dispositif de répartition de signal, une mesure ($M_i'$) d'un décalage en longueur d'onde.

9. Système (60B) selon la revendication 8, **caractérisé en ce que** pour chaque paire de photo-détecteurs, le calculateur (640) est configuré pour calculer un quotient :

$$\frac{(\alpha'_i - \beta'_i)}{(\alpha'_i + \beta'_i)}$$

avec $\alpha'_i$ désigne le signal fourni par l'un des photo-détecteurs de ladite paire et $\beta'_i$ désigne le signal fourni par l'autre des photo-détecteurs de ladite paire.

10. Système (60C) selon l'une quelconque des revendications 7 à 9, **caractérisé en ce qu'**il comporte en outre au moins un capteur ($651_1$; $651_2$; $651_3$) couplé optiquement au dispositif de répartition de signal, chaque capteur étant configuré pour traduire un paramètre à mesurer en un décalage en longueur d'onde sur un signal renvoyé par ledit capteur, relativement à une longueur d'onde nominale dudit capteur.

11. Système (60C) selon la revendication 10, **caractérisé en ce qu'**à chaque capteur ($651_1$ ; $651_2$; $651_3$) correspond un module de réception respectif du dispositif de répartition de signal, et **en ce que** dans chaque module de réception les deux guides d'onde de sortie sont configurés pour recevoir des signaux respectifs centrés chacun sur une longueur d'onde respective, où lesdites longueurs d'onde respectives encadrent la longueur d'onde nominale dudit capteur.

12. Système (60C) selon la revendication 10 ou 11, **caractérisé en ce qu'**il comprend en outre une fibre optique (650) au sein de laquelle sont inscrits plusieurs réseaux de Bragg ($651_1$ ; $651_2$; $651_3$) qui forment chacun un capteur respectif couplé optiquement au dispositif de répartition de signal.

**Patentansprüche**

1. Vorrichtung (200) zur Verteilung eines Signal, die zum Messen mindestens einer Wellenlängenverschiebung vorgesehen ist, und einen Gitterwellenleiter-Demultiplexer (210; 610) umfasst, der zur räumlichen Trennung der spektralen Beiträge eines optischen Eingangssignals ($S_E$) konfiguriert ist, und mindestens ein Empfangsmodul ($220_1$; $220_2$; $220_3$; $620_i$), wobei jedes Empfangsmodul einen Multimode-Interferenzkoppler ($221_1$; $221_2$; $221_3$; $221_i$; $421_i$) umfasst und zwei Ausgangswellenleiter ($222_1$, $223_1$; $222_2$, $223_2$; $222_3$, $223_3$; $222_i$, $223_i$; $422_i$, $423_i$; $622_i$, $623_i$), wobei sich der Multimode-Interferenzkoppler ($221_1$; $221_2$; $221_3$; $221_i$, $421_i$) zwischen dem Gitterwellenleiter-Demultiplexer (210; 610) und den zwei Ausgangswellenleitern ($222_1$, $223_1$; $222_2$, $223_2$; $222_3$, $223_3$; $222_i$, $223_i$; $422_i$, $423_i$; $622_i$, $623_i$) befindet und konfiguriert ist, um ein optisches Signal, das vom Gitterleiter-Demultiplexer stammt, auf die zwei Ausgangswellenleiter zu verteilen, **dadurch gekennzeichnet, dass** der Multimode-Interferenzkoppler ($221_1$; $221_2$; $221_3$; $221_i$; $421_i$) direkt an den Gitterwellenleiter-Demultiplexer (210; 610) angeschlossen ist oder von diesem durch einen Adapter vom Typ Taper getrennt ist.

2. Vorrichtung (200) nach Anspruch 1, **dadurch gekennzeichnet, dass** sich in jedem Empfangsmodul die jeweiligen Enden der zwei Ausgangswellenleiter jeweils auf einem jeweiligen Ausgangsbereich ($22_i$; $23_i$) des Multimode-Interferenzkopplers ($221_i$) befinden, wobei sich die Ausgangsbereiche zu beiden Seiten einer Symmetrieebene ($P_i$) des Multimode-Interferenzkopplers ($221_i$) erstrecken.

3. Vorrichtung (200) nach Anspruch 2, **dadurch gekennzeichnet, dass** in jedem Empfangsmodul die Ausgangsbereiche ($22_i$; $23_i$) in Bezug auf die Symmetrieebene ($P_i$) des Multimode-Interferenzkopplers ($221_i$) symmetrisch zueinander sind.

4. Vorrichtung (200) nach Anspruch 2 oder 3, **dadurch gekennzeichnet, dass** in jedem Empfangsmodul die Ausgangsbereiche ($22_i$; $23_i$) jeweils auf einen Punkt ($C1_i$; $C2_i$) zentriert sind, der sich in einem Abstand kleiner oder gleich 1500 nm befindet in Bezug auf eine Mittelachse ($A_i$) des Multimode-Interferenzkopplers ($221_i$).

5. Vorrichtung (200) nach einem der Ansprüche 1 bis 4, **dadurch gekennzeichnet, dass** sie eine Vielzahl von Empfangsmodulen ($220_1$; $220_2$; $220_3$; $620_i$) umfasst, die am Ausgang des Gitterwellenleiter-Demultiplexers (210; 610) nebeneinander angeordnet sind.

6. Vorrichtung (200) nach Anspruch 5, **dadurch gekennzeichnet, dass** sich in jedem Empfangsmodul die jeweiligen Enden der zwei Ausgangswellenleiter ($422_i$; $423_i$) jeweils auf einem jeweiligen Ausgangsbereich des Multimode-Interferenzkopplers ($421_i$) befinden, und dass in jedem Empfangsmodul ein Abstand (D3) zwischen einer Symmetrieebene des Multimode-Interferenzkopplers ($421_1$) und der ähnlichen Ebene in einem direkt benachbarten Empfangsmodul größer oder gleich dem dreifachen des Abstands (D4) zwischen den jeweiligen geometrischen Zentren des Ausgangsbereichs ist.

7. System zur Messung (60A; 60B; 60C) einer Wellenlängenverschiebung, **dadurch gekennzeichnet, dass** es eine Signalverteilungsvorrichtung nach einem der Ansprüche 1 bis 6 umfasst und mindestens ein Paar ($630_i$) von Fotodetektoren ($632_i$, $633_i$), wobei jedes Paar ($630_i$) von Fotodetektoren einem jeweiligen Empfangsmodul ($620_i$) der Signalverteilungsvorrichtung zugeordnet ist, und jeder Fotodetektor ($632_i$, $633_i$) des Paares konfiguriert ist, um ein Signal zu empfangen, das von einem der zwei Ausgangswellenleiter ($622_i$, $623_i$) des entsprechenden Empfangsmoduls ($620_i$) stammt.

8. System (60B) nach Anspruch 7, **dadurch gekennzeichnet, dass** es ferner ein Steuergerät (640) aufweist, das konfiguriert ist, um am Eingang Messsignale zu empfangen, die von dem mindestens einen Paar von Fotodetektoren geliefert werden, und um am Ausgang für jedes Empfangsmodul der Signalverteilungsvorrichtung eine Messung ($M_i$') einer Wellenlängenverschiebung zu liefern.

9. System (60B) nach Anspruch 8, **dadurch gekennzeichnet, dass** für jedes Paar von Fotodetektoren das Steuergerät (640) konfiguriert ist zur Berechnung des Quotienten:

$$\frac{(\alpha'_i - \beta'_i)}{(\alpha'_i + \beta'_i)}$$

wobei $\alpha'_i$ das Signal bezeichnet, das von einem der Fotodetektoren des Paares geliefert wird, und $\beta'_i$ das Signal

bezeichnet, das vom anderen der Fotodetektoren des Paares geliefert wird.

10. System (60C) nach einem der Ansprüche 7 bis 9, **dadurch gekennzeichnet, dass** es ferner mindestens einen Sensor ($651_1$; $651_2$; $651_3$) aufweist, der optisch mit der Signalverteilungsvorrichtung gekoppelt ist, wobei jeder Sensor konfiguriert ist, um einen zu messenden Parameter zu übersetzten in eine Wellenlängenverschiebung auf einem Signal, das durch den Sensor zurückgesendet wurde, in Bezug auf eine nominale Wellenlänge des Sensors.

11. System (60C) nach Anspruch 10, **dadurch gekennzeichnet, dass** jedem Sensor ($651_1$; $651_2$; $651_3$) ein entsprechendes Empfangsmodul der Signalverteilungsvorrichtung entspricht, und dass in jedem Empfangsmodul die zwei Ausgangswellenleiter konfiguriert sind, um jeweils auf eine jeweilige Wellenlänge zentrierte Signale zu empfangen, wobei die jeweiligen Wellenlängen die nominale Wellenlänge des Sensors flankieren.

12. System (60C) nach Anspruch 10 oder 11, **dadurch gekennzeichnet, dass** es ferner eine optische Faser (650) umfasst, in die mehrere Bragg-Spiegel ($651_1$; $651_2$; $651_3$) eingeschrieben sind, die jeweils einen jeweiligen Sensor bilden, der optisch mit der Signalverteilungsvorrichtung gekoppelt ist.

**Claims**

1. Signal-distributing device (200) for measuring at least one wavelength shift, and comprising an arrayed-waveguide-grating demultiplexer (210; 610) configured in order to spatially separate the spectral contributions of an input optical signal ($S_E$), and at least one receiving module ($220_1$; $220_2$; $220_3$; $620_i$), each receiving module comprising a multimode interference coupler ($221_1$; $221_2$; $221_3$; $221_i$, $421_i$) and two output waveguides ($222_1$, $223_1$; $222_2$, $223_2$; $222_3$, $223_3$; $222_i$, $223_i$; $422_i$, $423_i$; $622_i$, $623_i$), with the multimode interference coupler ($221_1$; $221_2$; $221_3$; $221_i$, $421_i$) located between the arrayed-waveguide-grating demultiplexer (210; 610) and the output waveguides ($222_1$, $223_1$; $222_2$, $223_2$; $222_3$, $223_3$; $222_i$, $223_i$; $422_i$, $423_i$; $622_i$, $623_i$) and configured to distribute, to the two output waveguides, an optical signal originating from the arrayed-waveguide-grating demultiplexer, **characterised in that** said multimode interference coupler ($221_1$; $221_2$; $221_3$; $221_i$; $421_i$) is attached directly against the arrayed-waveguide-grating demultiplexer (210; 610) or separated therefrom by a taper-type adapter.

2. Device (200) according to claim 1, **characterised in that** in each receiving module, the respective ends of the two output waveguides are each located in a respective output zone ($22_i$; $23_i$) of the multimode interference coupler ($221_i$), said output zones extending on either side of a plane of symmetry ($P_i$) of the multimode interference coupler ($221_i$).

3. Device (200) according to claim 2, **characterised in that** in each receiving module, said output zones ($22_i$; $23_i$) are symmetrical to each other relative to the plane of symmetry ($P_i$) of the multimode interference coupler ($221_i$).

4. Device (200) according to claim 2 or 3, **characterised in that** in each receiving module, said output zones ($22_i$; $23_i$) are each centred on a point ($C1_i$; $C2_i$) located at a distance less than or equal to 1500 nm relative to a central axis (Ai) of said multimode interference coupler ($221_i$).

5. Device (200) according to any one of claims 1 to 4, **characterised in that** it comprises a plurality of receiving modules ($220_1$; $220_2$; $220_3$; $620_i$) disposed next to one another at the output of the arrayed-waveguide-grating demultiplexer (210; 610).

6. Device (200) according to claim 5, **characterised in that** in each receiving module, respective ends of the two output waveguides ($422_i$; $423_i$) are each located in a respective output zone of the multimode interference coupler ($421_i$), and **in that** in each receiving module, a distance (D3) between a plane of symmetry of the multimode interference coupler ($421_i$) and the similar plane in a directly neighbouring receiving module is greater than or equal to three times the distance (D4) between the respective geometric centres of said output zones.

7. System (60A; 60B; 60C) for measuring a wavelength shift, **characterised in that** it comprises a signal-distributing device according to any one of claims 1 to 6 and at least one pair ($630_i$) of photodetectors ($632_i$, $633_i$), each pair ($630_i$) of photodetectors being associated with a respective receiving module ($620_i$) of the signal-distributing device, and each photodetector ($632_i$; $633_i$) of said pair being configured to receive a signal originating respectively from one of the two output waveguides ($622_i$, $623_i$) of the corresponding receiving module ($620_i$).

8.  System (60B) according to claim 7, **characterised in that** it further comprises a computer (640) configured to receive, as input, measurement signals supplied by at least one pair of photodetectors, and to supply as output, for each receiving module of the signal-distributing device, a measurement ($M_i'$) of a wavelength shift.

9.  System (60B) according to claim 8, **characterised in that** for each pair of photodetectors, the computer (640) is configured to calculate a ratio:

$$\frac{(\alpha'_i - \beta'_i)}{(\alpha'_i + \beta'_i)}$$

wherein $\alpha'_i$ designates the signal supplied by one of the photodetectors of said pair, and $\beta'_1$ designates the signal supplied by the other of the photodetectors of said pair.

10. System (60C) according to any one of claims 7 to 9, **characterised in that** it further includes at least one sensor ($651_1$; $651_2$; $651_3$) optically coupled to the signal-distributing device, each sensor being configured to translate a parameter to be measured into a wavelength shift on a signal returned by said sensor, relative to a nominal wavelength of said sensor.

11. System (60C) according to claim 10, **characterised in that** a respective receiving module of the signal-distributing device corresponds to each sensor ($651_1$; $651_2$; $651_3$), and **in that** in each receiving module the two output waveguides are configured to receive respective signals each centred on a respective wavelength, wherein said respective wavelengths frame the nominal wavelength of said sensor.

12. System (60C) according to claim 10 or 11, **characterised in that** it further comprises an optical fibre (650) within which a plurality of Bragg grating reflectors ($651_1$; $651_2$; $651_3$) are inscribed, which each form a respective sensor optically coupled to the signal-distributing device.

FIG.1

ART ANTERIEUR

FIG.2A

FIG.2B

FIG.3

FIG.4A

FIG.4B

FIG.5A

FIG.5B

60A

620ᵢ
622ᵢ
623ᵢ
630ᵢ
632ᵢ
633ᵢ

FIG.6A

60B

M'ᵢ

640

FIG.6B

60C

610

612

660

650

680

670

671

651₁
651₂
651₃

FIG.6C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104918145 B

- US 2007071388 A1

**Littérature non-brevet citée dans la description**

- **P. NIEWCZAS.** Performance Analysis of the Fiber Bragg Grating Interrogation System Based on an Arrayed Waveguide Grating. *IEEE Transactions on Instrumentation and Measurement,* Août 2004, vol. 53 (4), 1192-1196

- **P. MUÑOZ.** Analysis and design of arrayed waveguide gratings with MMI couplers. *Optics Express,* 24 Septembre 2001, vol. 9 (7